## Europäisches Patentamt
## European Patent Office
## Office européen des brevets

(11) Veröffentlichungsnummer: **0 169 552**
**B1**

# EUROPÄISCHE PATENTSCHRIFT

(45) Veröffentlichungstag der Patentschrift:
12.07.89

(51) Int. Cl.⁴: **A 61 C 13/26**

(21) Anmeldenummer: **85109236.1**

(22) Anmeldetag: **23.07.85**

---

(54) **Zahnersatzteil.**

---

(30) Priorität: **26.07.84 DE 3427579**

(43) Veröffentlichungstag der Anmeldung:
**29.01.86 Patentblatt 86/5**

(45) Bekanntmachung des Hinweises auf die Patenterteilung:
**12.07.89 Patentblatt 89/28**

(84) Benannte Vertragsstaaten:
**AT CH DE FR GB IT LI NL**

(56) Entgegenhaltungen:
**EP-A-0 156 273**
**CH-A-424 061**
**GB-A-510 893**
**GB-A-2 129 362**
**US-A-2 194 790**

**Technologie der Maschinenbaustoffe,**
**SCHIMPKE/SCHROPP, Hirzel Verlag Stuttgart,**
**Seite 277**

(73) Patentinhaber: **Renfert GmbH & Co.,**
**Weiherstrasse 6, D-7700 Singen/Htwl. (DE)**

(72) Erfinder: **Rieger, Klaus- Ulfert, Kornblumenweg 39,**
**D-7709 Hilzingen (DE)**

(74) Vertreter: **Hiebsch, Gerhard F., Dipl.- Ing.,**
**Erzbergerstrasse 5A Postfach 464, D-7700 Singen**
**1 (DE)**

EP 0 169 552 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Zahnersatzteil mit eine Metallkörper, der einen einends offenen Innenraum aufweist sowie mit einer Verblendung aus Kunststoff, Keramik od. dgl. versehen ist, wobei der Metallkörper als Tragelement aus einem Maschengitter gebildet sowie fest mit der ihn als Mantel umgebenden Verblendung verbunden ist.

Ein solches Zahnersatzteil ist aus der US-A-2 194 790 bekannt.

Bei diese bekannten Zahnersatzteil ist der Zahnstumpf von einer aus einm Netz bestehenden Metallkappe bedeckt, die vor dem Einsetzen in den Mund, in eine dicht aus Hartporzellan eingebrannt wurde, die wiederum mit einer Schicht aus Emaille oder sonstige Farbüberzug überzogen ist.

Die Krone, die auf den netzartigen Metalltragkörper aufgesetzt wird, wird durch eine Zementschicht am Zahnstumpf befestigt. Die US-A-2 194 790 zeigt auch noch eine andere Ausführungsform mit einer zusätzlichen inneren glatten Metallkappe zur Befestigung mit Zement am Zahnstumpf, auf die dann eine Metallkappe aus eine Metallgitter aufgelötet oder - geschweißt wird, bevor dann die Porzellan- und Emailleschichten auf die Gitterkappe aufgebrannt werden.

Schließlich ist der US-A-2 194 794 auch noch eine Brückenkonstruktion mit vier Teilen zu entnehmen. Auf die Zahnstümpfe der Brückenenden werden Metallkappen (keine netzartigen Metallkörper) mit vorstehenden Stiften aufgeklebt. Die zwei Metallkappen der Brüchenenden sind durch eine Metallschiene, die ebenfalls vorstehende Stifte hat, verbunden. Mit diesen Stiften sind wiederum metallische Gitterkappen verbunden, auf die wieder die Porzellan- oder Emailleverblendung kommt.

Außerdem ist aus der GB-A-510 893 ein Zahnsatzteil bekannt, bei dem in eine Platinkrone, nach dem Aufsetzen der Krone auf den Zahnstumpf, ein oder mehrere Löcher oder auch Rinnen eingearbeitet werden, die eine bessere Verbindung mit der Verblendung ergeben sollen. Als Alternative ist dann dort noch die Möglichkeit erwähnt, Löcher und Rinnen in der Platinkrone wegzulassen und stattdessen - oder zusätzlich - auf der Platinkrone ein Drahtnetz aufzulöten und derauf die Verblendung anzubringen.

Schließlich ist aus "Technologie der Maschinenbaustoffe" dort Seite 277, bekannt, das Wachsausschmelzverfahren für Zahnprothesen zu verwenden.

Der Erfindung liegt die Aufgabe zugrunde, eine Lehre für die Bemaßung des metallischen Litten eines Zahnersatzteiles auzugeben, so daß mit Hinsicht auf die gewünschte Stabilität bei gleichzeitig geringem Gewicht eine gute Transluzenz des fertigen, also den Keramikmantel, Kunststoffmantel od. dgl. aufweisenden Zahnersatzteils gewährleistet ist.

Die Lösung dieser Aufgabe wird darin gesehen, daß die metallischen Gitterstege einen Durchmesser von etwa 0,30 bis 0,60 mm, aufweisen und daß die lichte Weite der Gittermaschen etwa 0,5 bis 1,0 mm, beträgt.

Bevorzugt beträgt der Durchmesser der Gitterstege 0,4 mm und/oder die lichte Weite der Gittermaschen beträgt 0,7 mm.

Die Herstellung des Netzwerks für den Metallkörper erfolgt dadurch, daß ein Gitterhütchen - bevorzugt ein Wachsgitterhütchen - aus rückstandslos verbrennendem Werkstoff als Modell hergestellt und unter Erzeugung der Form verbrannt wird, wonach in letztere eine Metallschmelze eingebracht und und das aus dieser entstehende Netzhütchen der Verblendwerkstoff aufgebaut wird.

Eine besondere Weiterbildung der Erfindung besteht darin, daß zwei der aus dem Maschengitter gebildeten Tragelemente oder Traghütchen durch wenigstens einen Verbindungsstab verbunden und durch ein an diesen angegossenes Gitterteil zu einer Brückenkonstruktion ergänzt sind. Dadurch entsteht ein Brückenaufbau der geringes Gewicht und eine gute, naturlich wirkende Transluzenz auch der Brückenendteile bzw. ihrer Zahnstümpfe aufweist. Beim Stand der Technik nach der US-A-2 194 790 sind auf die Zahnstümpfe der Brückenenden Vollmetall-Kappen aufgeklebt und durch eine Metallschiene, die vorstehende Stifte hat, verbunden. Mit diesen stiften sind dann metallische Gitterkappen verbunden, auf die wieder die Porzellan- oder Emailleverblendung kommt.

Eine besondere Weiterbildung der Erfindung besteht darin, daß der Gittersteg einen Querschnitt mit halbkreisförmiger Kontur aufweist, der sich einer Rechteckkontur anschließt und /oder, daß der Gittersteg einen Querschnitt mit teilkreisförmiger Kontur aufweist, an die sich eine mehreckige Sockelkontur mit wenigstens eine hinterschnittenen Bereich anschließt, welcher auf der von der Verblendung abgekehrten Seite liegt.

Dadurch ergibt sich eine kraftschlüssige Verbindung zwischen der Verblendung und dem Gitterkorb, da ja bevorzugt zumindest eine der Gitterstegkanten einwärts abgeschrägt ist.

Dank des an Metalloberflächen üblichen Oxidationsvorganges entsteht eine innige Verbindung zwischen dem Keramikmantel und der aufbrennfähigen Legierung des Tragelementes oder Traghütchens, ohne daß es weiterer Zwischenschichten bedürfte.

In einer besonderen Weiterbildung ist der gitterartige Traghut im hinteren, zungenwärtigen Bereich des Zahnersatzes verstärkt ausgebildet, wobei gegebenenfalls der Traghut an der Öffnung des Innenraums zumindest an der zungenwärtigen Seite eine Randrippe aufweist. Dadurch ist vor allen bei sogenannten Brückenpfeilern das Traghütchen gaumenwärts stärker ausgebildet, gegebenenfalls auch mehrlagig, ohne daß sich dadurch die Transluzenz merklich verschlechtern würde.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1    die Rückenansicht eines Zahnersatzes in Form einer Krone, aus Tragelement und Verblendung;

Fig. 2    den Längsschnitt durch Fig. 1 nach deren Linie II - II;

Fig. 3    eine Schrägansicht auf das Tragelement;

Fig. 4    eine Sicht auf einen Teil eines Hilfsmittels zum Herstellen des Tragelementens;

Fig. 5    vergrößerte Teilquerschnitte durch einen Teil eines Tragelements;

Fig. 6    die Rückenansicht eines Tragelements für eine Brückenkonstruktion;

Fig. 7    den Schnitt durch Fig. 6 nach deren Linie VII - VII durch Tragelement und Verblendung:

Fig. 8    eine andere Brückenkonstruktion in einer der Fig. 6 entsprechenden Wiedergabe.

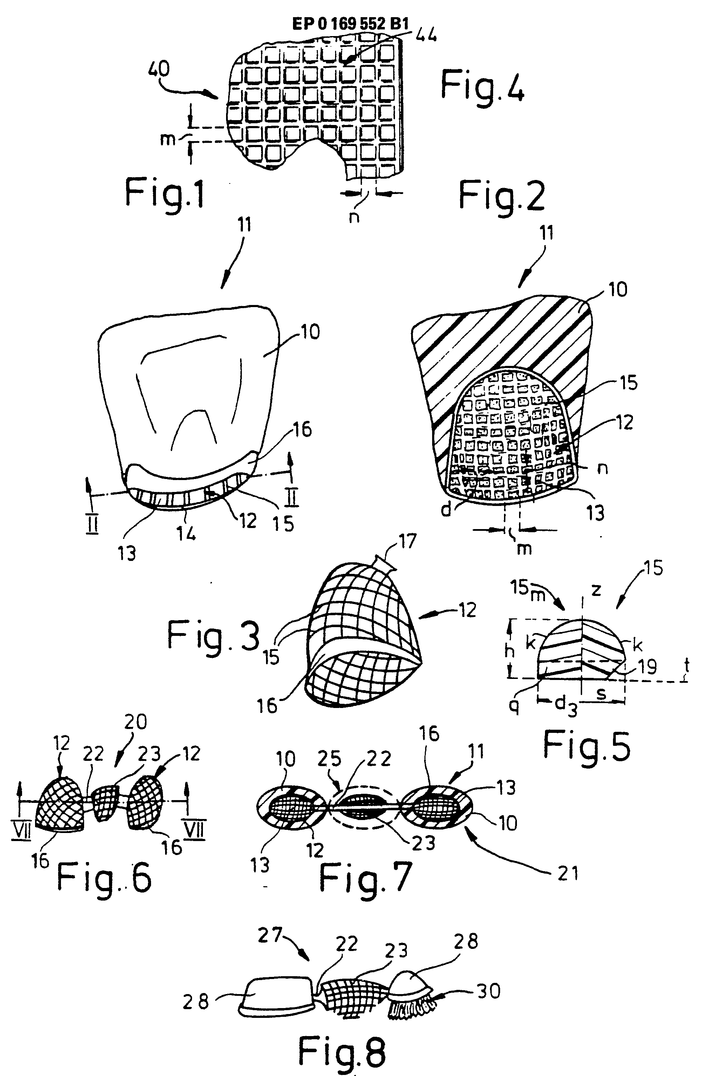

Der Keramikmantel 10 einer Krone 11 ist auf einem Tragelement 12 aus einem metallischen Gitter mit einer lichten Weite der Gitterfelder - folgend Maschenweite - m, n von etwa 0,6 x 0,6 mm bis 1,0 x 1,0 mm aufgebaut, das einen Kroneninnenraum 13 mit in Fig. 1 abwärts weisender Öffnung 14 begrenzt.

Der Durchmesser d der metallischen Gitterstege 15 beträgt etwa 0,3 mm bis 0,6 mm. In Draufsicht kann die Form der Gittermaschen des Tragelements 12 leicht oval sein, was in der Zeichnung aus Gründen der Überischtlichkeit vernachläßigt ist.

Zur Herstellung dieses einem verkleinerten Fingerhut ähnlichen Tragelements 12 - folgend Traghut 12 - wird auf einen Modellstumpf mit dünnem Wachsüberzug ein Wachsgitter 40 der beschriebenen Gitterform und - größe aufgebracht, das sich mit seinen Wachssträngen 44 der Stumpfaußenseite ohne weiteres anschmiegt. Auf der späteren Kronenrückseite, also lingual, wird ein Verstärkungsrand anmodelliert. Das rückstandslos verbrennende Wachsgitter 40 dient als Platzhalter für das dann in dieser Form gegossene metallische Gitter, bei dem jener Verstärkungsrand als teilringartige Randrippe 16 erscheint.

Der so entstandene Traghut 12 ist in Fig. 3 wiedergegeben und läßt an seiner nach unten weisenden Öffnung jene Randrippe 16 erkennen sowie am geschlossenen oberen Ende einen abzuschleifenden Angußzapfen 17.

Auf den Traghut 12 wird Opakflüssigkeit als Grundierung aufgetragen, anschließend der Keramikmantel 10 als feuchte Masse. Die oben bezifferte Maschenweite m, n des Traghuts 12 verhindert ein Ablaufen von Keramikteilchen während des Auftragens jener Keramikmasse.

Der keramische Werkstoff haftet dank der sich auf der Gitteroberfläche einstellenden Oxydschicht sehr fest. Die Schichtstärke des Keramikmantels 10 auf dem - seinerseits in den Gitterfeldern lichtdurchlässigen - Gitter des Traghutes 12 ist erheblich größer als bei üblichen Verblendungen, so daß eine dem natürlichen Zahn nahezu entsprechende Transluzenz entsteht

Das Haften der Keramik auf dem Traghut 12 ermöglicht - wie beschrieben - zum Teil die Oxidschicht des Metalls, zudem das Aufschrumpfen des Keramikmantels 10 während des Brennvorganges auf den Traghut 12. Außerdem hilft eine zusätzlich erzeugbare Oberflächenrauhigkeit mit ihren Eingriffkavernen und das Hintergreifen von Vorsprüngen. Im Falle der Verwendung von Kunststoff für den Mantel 10 tritt nur eine formschlüssige Bindung, nämlich jenes Hintergreifen der Vorsprünge, ein.

Fig. 5 zeigt zwei Ausführungsformen des - stark vergrößerten - Querschnitts durch einen der Gitterstege 15; jeder zur Hälfte dargestellte Querschnitt wird jenseits einer Symmetrieachse z durch eine in der Form entsprechende zweite Hälfte ergänzt. So wird der in fig. 5 linke Querschnitt des Gitterstabes $15_m$ durch eine Halbkreiskontur k und eine Rechteckkontur q begrenzt. Die Gesamthöhe h des Gitterstabes $15_m$ entspricht hier dem Maß der auch als Durchmesser zu bezeichnenden Weite $d_3$ von 0,4 mm.

Das in Fig. 5 rechte Beispiel 15 läßt erkennen, daß hier die Rechteckkontur durch eine mehreckige Sockelkontur s ersetzt ist, die einen hinterschnittenen Randbereich 19 erzeugt, bei t ist eine Anlageoberfläche angedeutet.

Ein in Fig. 6 gezeigtes Tragelement 20 für eine Brückenkonstruktion 21 besteht aus zwei der Traghüte 12, die durch einen angeformten Stab 22 verbunden sind. Auf letzterem sitzt ein Gitterteil 23. Dieses und jene Traghüte 12 sind im bukkalen Bereich dünner als an ihrer zungenwärtigen Rückenseite. Die Traghüte 12 in Gitterform sind stabile und wünschenswert geringmächtige Halterungen, die für eine Zwischenkrone 25, welche ihrerseits auf dem Gitterteil 23 aufgebaut ist, auf Zahnstümpfe 30 (Fig. 8) aufgesetzt werden.

Insgesamt ergibt sich auch hier eine erhebliche Gewichtsminderung gegenüber konventionellem Zahnersatz bei gleichzeitig kostensenkender Werkstoffeinsparung.

Die in Fig. 8 dargestellte Brückenkonstruktion 27 besteht aus zwei Metallkappen 28, auf deren Verbindungsstab 22 ein Gitterteil 23 sitzt. Gegenüber dem Ausführungsbeispiel der Fig. 6 ist hier das Gewicht höher - dank des Netzteils 23 dennoch geringer als bei konventionellen Brückenkonstruktionen.

## Patentansprüche

1. Zahnersatzteil mit eine Metallkörper, der einen einends offenen Innenram aufweist sowie mit einer Verblendung aus Kunststoff, Keramik od. dgl. versehen ist, wobei der Metallkörper als Tragelement (12) aus einem Maschengitter gebildet sowie fest mit der ihn als Mantel (10) umgebenden Verblendung verbunden ist,

dadurch gekennzeichnet,

daß die metallischen Gitterstege (15) einen Durchmesser (d) von etwa 0,30 bis 0,60 mm, aufweisen und daß die lichte Weite (m, n) der Gittermaschen etwa 0,5 bis 1,0 mm beträgt.

2. Zahnersatzteil nach Anspruch 1, dadurch gekennzeichnet, daß der Duchmesser (d) der Gitterstege (15) 0,4 mm beträgt und/oder daß die lichte Weite (m, n) der Gittermaschen 0,7 mm beträgt.

3. Zahnersatzteil nach Anspruch 1 oder 2, dadurch gekennzeichnet, daß zwei der aus dem Maschengitter gebildeten Tragelemente (12) durch wenigstens einen Verbindungsstab (22) verbunden und durch ein an diesen angegossenes Gitterteil (23) zu einer Brückenkonstruktion (21) ergänzt sind.

4. Zahnersatzteil nach einem der Ansprüche 1 bis 3, dadurch gekennzeichnet, daß der Gittersteg (15$_m$) einen Querschnitt mit halbkreisförmiger Kontur (k) aufweist, der sich einer Rechteckkontur (q) anschließt und/oder, daß der Gittersteg (15) einen Querschnitt mit teilkreisförmigen Kontur (k) aufweist, an die sich eine mehreckige Sockelkontur (s) mit wenigstens einem hinterschnittenen Bereich (19) anschließt, welcher auf der von der Verblendung (10) abgekehrten Seite liegt (Fig. 5).

5. Zahnersatzteil nach einem der Ansprüche 1 bis 4, dadurch gekennzeichnet, daß der Gittersteg (15) eine polygone Querschnittkontur (s) aufweist und/oder daß die Maschenöffnungen eine ovale Form haben.

6. Zahnersatzteil nach einem der Ansprüche 1 bis 5, dadurch gekennzeichnet, daß das als gitterartiger Traghut (12, 23) ausgebildete Tragelement im hinteren zungenwärtigen Bereich des zahnersatzes (11, 21) verstärkt ausgebildet ist, wobei gegebenenfalls der Traghut (12) an der Öffnung (14) des Innenraums (13) zumindest an der zungenwärtigen Seite eine Randrippe (16) aufweist.

## Claims

1. A dental prosthesis comprising a metal body which has an internal cavity that is open at one end, with a facing of plastic material, ceramic or the like, whereby the metal body is formed as carrier element (12) from a filigree grid or lattice having meshes and is fixedly connected to the facing which encloses it in the form of a casing layer,

characterized in that

the metallic grid or lattice bars (15) show a diameter of about 0,30 to 0,60 mm and that the internal width (m, n) of the grid or lattice meshes amounts to 0,70 mm.

2. A dental prosthesis according to claim 1, characterized in that the diameter (d) of the grid or lattice bars (15) amounts to 0,4 mm and/or that the internal width (m, n) of the grid or lattice meshes amounts to 0,70 mm.

3. A dental prosthesis according to claim 1 or 2, characterized in that two carrier elements (12), which are formed from the grid or lattice are connected by at least one bar (22) and are supplemented to a bridge construction by a grid or lattice portion (23), which is cast on said at least one bar.

4. A dental prosthesis according to one of the claims 1 to 3, characterized in that the grid or lattice bars (15m) has a cross-section with semicircular contour (k), which connects with a rectangular contour (q) and/or, that the grid or lattice bar (15) has a cross-section with part-circular contour (k), to which a polygonal base contour (s) with at least one under cut region (19) connects, which is disposed on the side remote from the facing (10), (Fig. 5).

5. A dental prosthesis according to one of the claims 1 to 4, characterized in that the grid or lattice bar (15) has a polygonal cross-sectional contour (s) and/or that the mesh aperatures are of an oval form.

6. A dental prothesis according to one of the claims 1 to 5, characterized in that the carrier element structured as grid-like carrier cap (12, 23), is of a strengthened construction in the rear region, where the tongue is situated, of the dental prosthesis (11, 21), whereby if necessary the carrier cap (12) has an edge rib (16), at the opening (14) of the inner cavity (13), at least at the side towards the tongue.

## Revendications

1. Pièce de prothèse dentaire avec un corps métallique qui possède un intérieur ouvert à un côté et qui est pourvu d'une incrustation en résine, céramique ou une chose semblable, le corps métallique, en tant qu'élément porteur (12) étant fait d'un grillage de fils métalliques et étant lié de manière fixe à l'incrustation qui l'entoure comme gaine (10)

caractérisé en ce que

les traverses métalliques (15) du grillage présentent un diamètre (d) d'environ 0,30 à 0,60 mm et que le diamètre intérieur (m, n) des mailles de grille se monte à environ 0,5 à 1,0 mm.

2. Pièce de prothèse dentaire selon la revendication 1 caractérisé en ce que le diamètre (d) des traverses (15) est de 0,4 mm et/ou que le diamètre intérieur (m, n) des mailles de grille est de 0,7 mm.

3. Pièce de prothèse dentaire selon la revendication 1 ou 2 caractérisé en ce que deux des éléments porteurs (12) formés des fils métalliques sont liés moyennant au moins un barreau de jonction (22) et qu'ils sont complétés comme construction de bridge (21) par une pièce de grillage (23) venue de fonte.

4. Pièce de prothèse dentaire selon une des revendications 1 à 3 caractérisé en ce que la traverse (15 m) présente une section transversale avec un contour (k) demicirculaire qui suit un contour rectangulaire (q) et/ou que la traverse (15) présente une section transversale avec un contour (k) d'un cercle gradué auquel suit un contour de socle (s) polygonal avec au moins une zone contre-dépouillée (19) qui se trouve sur le côté opposé à l'incrustation (10) (fig.5).

5. Pièce de prothèse dentaire selon une des revendications 1 à 4 caractérisé en ce que la traverse (15) présente un contour de section transversale polygonal (s) et/ou que les ouvertures des mailles ont une forme ovale.

6. Pièce de prothèse dentaire selon une des revendications 1 à 5 caractérisé en ce que l'élément porteur fait comme chape porteuse treillissée (12, 23) est renforcé dans la zone arrière de la prothèse dentaire (11, 21) se trouvant vers la langue, la chape porteuse (12) présentant, le cas échéant, une nervure de bord (16) à l'ouverture (14) de l'intérieur (13) au moins au côte vers la langue.

EP 0 169 552 B1

1

EP 0 169 552 B1

Fig.4

Fig.1

Fig.2

Fig.3

Fig.5

Fig.6

Fig.7

Fig.8